# EUROPÄISCHE PATENTSCHRIFT

(11) **EP 2 129 635 B1**
(45) Veröffentlichungstag und Bekanntmachung des Hinweises auf die Patenterteilung: **23.06.2010**
(21) Anmeldenummer: 08715908.3
(22) Anmeldetag: 21.02.2008
(51) Int. Cl.: C04B 35/043, C04B 35/103

(54) **KERAMISCHES ERZEUGNIS FÜR HOCHTEMPERATURANWENDUNGEN**
CERAMIC PRODUCT FOR HIGH-TEMPERATURE APPLICATIONS
PRODUIT CÉRAMIQUE POUR APPLICATIONS À HAUTE TEMPÉRATURE

(30) Priorität: 03.03.2007 DE 102007010365
(43) Veröffentlichungstag der Anmeldung: 09.12.2009
(73) Patentinhaber: Refractory Intellectual Property GmbH & Co. KG, 1100 Wien (AT)
(72) Erfinder: HARMUTH, Harald, A-8700 Leoben (AT); DJURICIC, Boro, A-8700 Leoben (AT)
(74) Vertreter: Becker, Thomas
(86) Internationale Anmeldenummer: PCT/EP2008/001343
(87) Internationale Veröffentlichungsnummer: WO 2008/107076

(56) Entgegenhaltungen:
- EP-A- 1 052 233
- WO-A-86/05481
- WO-A-2004/079284
- CA-A1- 2 323 764
- NANDY ET AL: "Hydration of coked MgO-C-Al refractories" CERAMICS INTERNATIONAL, ELSEVIER, AMSTERDAM, NL, Bd. 32, Nr. 2, 1. Januar 2006 (2006-01-01), Seiten 163-172, XP005205597 ISSN: 0272-8842
- ANEZIRIS ET AL: "Microstructure evaluation of MgO-C refractories with TiO2- and Al-additions" JOURNAL OF THE EUROPEAN CERAMIC SOCIETY, ELSEVIER SCIENCE PUBLISHERS, BARKING, ESSEX, GB, Bd. 27, Nr. 1, 6. November 2006 (2006-11-06), Seiten 73-78, XP005848777 ISSN: 0955-2219
- C.G. ANEZIRIS, D. BORZOV, J.ULBRICHT: "Magnesia-Carbon Bricks- A High-Duty Refractory Material" INTERCERAM. REFRACTORIES MANUAL, 2003, Seiten 22-27, XP002479890

## Beschreibung

Die Erfindung betrifft ein keramisches Zement-Drehofen Auskleidungs-Erzeugnis für Hochtemperaturanwendungen, womit Anwendungstemperaturen über 1.000° C gemeint sind.

Ein Zement-Drehofen dient zum Brennen von Zementklinker.

Insbesondere die thermisch höher beanspruchten Bereiche (wie die Brennzone mit einlauf- und auslaufseitigen Übergangszonen oder der Ofenauslauf) sind meist mit basischen Feuerfestbaustoffen zugestellt (ausgekleidet). Reine MgO-Produkte weisen zwar eine hohe Feuerfestigkeit auf, sind aber extrem spröde. Dies ist gerade bei rotierenden Öfen nachteilig. Es wurde deshalb vorgeschlagen, die Gefügeelastizität durch Spinellzusätze zu erhöhen (DE 44 03 869).

In der WO 2004/079284 wird ein Mauerwerk für einen Ofen zum Brennen von Zementklinker beschrieben. Um die Temperaturwechselbeständigkeit zu verbessern werden Steine auf Basis MgO-C vorgeschlagen, wobei der Kohlenstoff im heißseitigen Oberflächenbereich der Steine enthalten sein soll.

Die thermomechanische Beanspruchung ist nur ein Aspekt bei der Beurteilung des Verschleißverhaltens.

Insbesondere dort, wo gebrannte geformte feuerfeste Erzeugnisse eingesetzt werden kommt es zu einer Infiltration schmelzflüssiger Phasen, die beim Brennen von Zementklinker gebildet werden.

"stahl und eisen Special" November 2006 enthält einen Aufsatz von Dr. Peter Bartha "A MgO-C material type for application heavily loaded with alkali". Es wird beschrieben, dass der Kohlenstoff-Zusatz die Infiltration von Schmelzen erschwert (anti-wetting effect). Es wird weiters beschrieben, dass Produkte aus einem grobkörnigen MgO-Rohstoff (Korngröße bis 5 mm) geringere Festigkeiten aufweisen als entsprechende Produkte mit kleineren MgO-Korngrößen (bis 1,2 mm). Dabei wird erklärt, dass die Festigkeitsverbesserung durch einen erhöhten Anteil an flüssigem Kunstharz (Bindemittelkomponente) und eine homogenere Struktur erreicht wird.

Die aus "stahl und eisen" bekannten MgO-C-Erzeugnisse enthalten Kohlenstoff in Form von Flockengraphit. Dieser Graphit weist in Richtung seiner Schichtebenen eine gute Wärmeleitfähigkeit auf. Beim (uniaxialen) Pressen ordnen sich diese Schichtebenen senkrecht zur Presskraft an. Diese Richtung entspricht nach Einbau der Steine dem Radius des Zementdrehrohrofens und damit der Richtung des Wärmeflusses. Dadurch kann die Wärmeleitfähigkeit in radialer Richtung des Drehrohrofens sehr viel höher als senkrecht dazu sein. Dadurch kommt es zu relativ hohen Temperaturen im Umfangsbereich der Ausmauerung, also im Bereich des äußeren Stahlmantels des Ofens. Dies ist nachteilig.

Der Erfindung liegt die Aufgabe zugrunde, ein keramisches Erzeugnis der vorgenannten Art für Hochtemperaturanwendung in Zementdrehrohröfen bereitzustellen, das neben guten mechanischen Eigenschaften möglichst viele der folgenden Kriterien erfüllt: Korrosionsbeständigkeit gegenüber Schmelzen und Gasen, weitestgehend isotrope Wärmeleitfähigkeit, vorteilhafte Gefügeflexibilität.

In systematischen Versuchen wurden die Einflüsse von Rohstoffen, deren Korngrößen, Masseanteile, Bindemittel etc. untersucht.

Dabei wurde festgestellt, dass die Kohlenstoff-Komponente in Hinblick auf die Infiltrationsbeständigkeit des keramischen Erzeugnisses wichtig ist und sich dann nicht nachteilig auf die Wärmeleitfähigkeit des Produktes auswirkt, wenn die Kohlenstoff-Komponente in einer Teilchengröße d₅₀, vorteilhaft d₉₅ < 125 µm vorliegt. Auf diese Weise wird die Orientierung von Graphitschichten entlang bestimmter Schichtebenen deutlich reduziert oder vermieden. Die Verwendung von feinteiligem Kohlenstoff führt zu einer weitestgehend isotropen Verteilung des Kohlenstoffs und damit zu einer weitestgehend isotropen Wärmeleitfähigkeit des zugehörigen Produktes.

Auch die oxidischen Komponenten des Versatzes zur Herstellung des keramischen Erzeugnisses werden erfindungsgemäß in einer Kornfraktion d₅₀, nach einer Ausführungsvariante d₉₅ von jeweils < 125 µm eingesetzt.

Das Erzeugnis ist zu ≥ 30 Masse-% aus verpressten Granalien aufgebaut.

Danach betrifft die Erfindung in ihrer allgemeinsten Ausführungsform ein keramisches Erzeugnis der genannten Art gemäß Anspruch 1.

Die Granulierung umfasst verwandte Misch- und Kompaktierungsverfahren wie Brikettierung, Strangpressen. Für die Granalien gilt:
Die MgO-hältige Komponente kann Magnesiasinter aus natürlichen Rohstoffen, synthetische Sintermagnesia, aber auch Dolomasinter aus natürlichen Rohstoffen oder Schmelzdoloma sein. Der Eisengehalt, gerechnet als Fe₂O₃, sollte in der Regel < 1 M.-%, bezogen auf 100 M.-% der MgO-hältigen Komponente, liegen, nach Ausführungsformen unter 0,6 beziehungsweise 0,3 M.-%. Dadurch wird vermieden, dass bei der Anwendung im Hochtemperaturbereich eine Reduktion des Fe₂O₃ zu metallischem Eisen erfolgt, wodurch der Kohlenstoff oxidieren könnte und der Kohlenstoffgehalt reduziert würde.

Die sonstigen Feststoffkomponenten sind optional und umfassen beispielsweise: Metallpulver, beispielsweise auf Basis Silizium, Aluminium, Magnesium oder Legierungen daraus. Diese Metallpulver können im Produkt mehrere Funktionen erfüllen. Sie gewährleisten einen geringen Sauerstoffpartialdruck und verhindern dadurch einen vorzeitigen Abbrand des Kohlenstoffs. Sie bilden auch Carbide, beispielsweise Aluminiumcarbid - Al₄C₃ - oder Siliziumcarbid - SiC -, die sich günstig auf die Bindung des keramischen Systems auswirkt. Diese sonstigen Feststoffkomponenten werden nach einer Ausführungsform ebenfalls in einer Kornfraktion d₅₀ < 125 µm, nach einer Variante d₉₅ < 125 µm eingesetzt.

Das Bindemittel zur Aufbereitung von Granalien aus den Feststoffkomponenten wie Magnesia, Doloma, Graphit kann ein kohlenstoffhaltiges Bindemittel wie Kunstharz, Steinkohleteerpech, Steinkohleteer oder ein bituminöses Produkt sein. Konkrete Beispiele für das Bindemittel sind Phenolformaldehydharze, die in wässriger Form (als Resole) oder in nichtwässriger Lösung (als Novolakharze) eingesetzt werden können.

Die Aufbereitung der Versatzkomponenten zu Granalien erfolgt mit üblicher Granuliertechnik auf eine Granaliengröße von < 5 mm oder < 3 mm, insbesondere < 1 mm. Es ist günstig, wenn die Granaliengröße d₅₀ unter 1 mm liegt. Nach einer Ausführungsform liegt auch der Wert d₉₅ unter 1 mm. Mit Hilfe der Granulierung werden die feinteiligen Versatzkomponenten und das Bindemittel homogen vermischt. Anschließend erfolgt die Herstellung zu Formteilen, wie Steinen, beispielsweise mit einer hydraulischen Presse, wobei das Formteil zuvor üblicherweise getrocknet (gehärtet) wird, beispielsweise bei Temperaturen zwischen 90° und 150° C. Das Produkt kann aus einem Versatz hergestellt sein, der vollständig oder teilweise aus den genannten Granalien besteht.

Der Masseanteil der MgO-hältigen Komponente an den Granalien liegt nach einer Ausführungsform oberhalb 80 %, der Masseanteil der kohlenstoffhältigen Komponente an den Granalien nach einer weiteren Ausführungsform über 10 %.

Die Korngröße der MgO-hältigen Granalien-Komponente kann auf Werte d₅₀ oder d₉₅ < 50 µm herabgesetzt werden. Gleiches gilt alternativ oder kumulativ für die kohlenstoffhältige Komponente sowie die sonstigen Feststoffkomponenten.

Der Granalienanteil im Versatz beträgt ≥ 30 M.-%, nach Ausführungsformen > 40 M.-%, > 60 M.-%, > 85 M.-%, ≥ 95 M.-%. Die weiteren Komponenten können nicht granulierte Komponenten sein.

Nicht granulierte Versatz-Anteile bestehen ausschließlich oder überwiegend aus Komponenten, die bei Hochtemperaturanwendungen feuerfest sind, insbesondere MgO-hältigen Komponenten in konventionellen Körnungen (bis 6mm), aber auch vollständig oder teilweise in feinteiliger Form (<250µm).

Die Erfindung wird nachstehend anhand verschiedener Ausführungsbeispiele näher erläutert.

Tabelle 1 zeigt die Zusammensetzung von Granalien mit einem Durchmesser d₉₅ < 1 mm, die anschließend zu Formteilen verpresst werden. Diese Formteile gelangen ungebrannt zur Anwendung. Die feuerfesten Eigenschaften des Produktes entwickeln sich also erst beim Einsatz beispielsweise in einem Zement-Drehrohrofen. Ein erfindungsgemäßes Erzeugnis kann sowohl gebrannt wie ungebrannt sein.

Trotz eines relativ hohen Anteils an feinteiligem (d₈₀<30µm oder d₈₀<3µm) Kohlenstoff
(10 M.-% und mehr) lassen sich die Produkte verpressen. Dies ist vor allem auf die Granulierung zurückzuführen. Gleichzeitig wird eine Bildung zusammenhängender Graphitschichten aus einzelnen oder kontaktierenden Graphitteilchen ebenso weitgehend vermieden wie die Ausrichtung von Schichtebenen senkrecht zur Pressrichtung. Vorteilhaft stellt sich aufgrund der Feinteiligkeit des Kohlenstoffs eine isotrope Wärmeleitfähigkeit des Produktes ein. Im Vergleich zu konventionellen Magnesiacarbonprodukten ist festzustellen: Bei gleicher Zusammensetzung ist die Wärmeleitfähigkeit des erfindungsgemäßen Produktes geringer als das Maximum der Wärmeleitfähigkeit eines konventionellen Magnesiacarbonsteins mit anisotroper Wärmeleitfähigkeit. Dies hat folgende Gründe: Bei einem Magnesiacarbonstein herkömmlicher Technologie steht für die Verteilung des Kohlenstoffträgers (insbesondere für den Graphit) nur das Matrixvolumen zwischen den Grobkörnern zur Verfügung. Dadurch ergeben sich zahlreiche Kontakte der einzelnen Graphitteilchen untereinander. Das erhöht die Wärmeleitfähigkeit. Bei einem erfindungsgemäßen Erzeugnis wird der Kohlenstoffträger demgegenüber im feinteiligen und homogenen Produkt(anteil) gleichmäßig dispergiert. Teilchenkontakte des Kohlenstoffträgers sind deutlich seltener und die Wärmeleitfähigkeit ist geringer. Dies gilt insbesondere für Produkte, die neben den genannten Granalien eine weitere, bei der Anwendung feuerfeste Komponente enthalten. Diese Komponente kann eine MgO-hältige Komponente wie Sinter- oder Schmelzmagnesia, Sinterdoloma oder dergleichen sein. Die weitere Versatz- und Produkt-Komponente kann als Grobkorn eingesetzt werden. Im Verhältnis zu den Bestandteilen der Granalien bedeutet Grobkorn erfindungsgemäß über 125µm beziehungsweise: d₅₀>0,5mm, beispielsweise 1-4mm. Der Grobkornanteil, der im Produkt mindesten 30 Masse-% ausmachen kann, kann auch >50 Masse-% oder >60 Masse-% betragen. Um die Wirkung der Granalien nicht zu gefährden betragt der Granalienanteil regelmäßig aber > 30 Masse-%. Durch die Grobkornkomponente wird die Wärmeleitung im Produkt vorteilhaft und zusätzlich unterbrochen, weil sich durch das Grobkorn der Abstand der Kohlenstoff-Teilchen vergrößert.

Der in der Tabelle angegebene Restkohlenstoffgehalt bezieht sich auf einen Wert nach reduzierender Verkokung bei 1.000° C.

Alle Gewichtsangaben in Masseprozent.

Nach der Herstellung der Produkte aus Granalien bzw. Granalien und Feuerfest-Zusatzkomponente erfolgt je nach Bindemittel eine Härtung beziehungsweise Temperung bei Temperaturen zwischen 150 und 350°C.

**Tabelle 1:**

| | | | | | | |
|---|---|---|---|---|---|---|
| | Beispiele | | | | | |

| Rohstoffe | Nr. 1 | Nr. 2 | Nr. 3 | Nr. 4 | Nr.5 | Nr. 6 |
|---|---|---|---|---|---|---|
| Magnesiasinter 1 d₅₀ ≤ 25 µm | 90 | 87 | | 73 | 83,5 | |
| Magnesiasinter 2 d₅₀ ≤ 25 µm | | | 53 | | | |
| Dolomasinter d₅₀ ≤ 30 µm | | | 32 | | | 83 |
| Siliziumpulver ≤ 20 µm | | 2 3 | | | | |
| Aluminiumpulver ≤ 25 µm | | 1 | | | 2,5 | |
| Ruß d₈₀ ≤ 30 µm | 10 | 10 | 4 | 16 | 6 | 5 |
| Graphit d₈₀ ≤ 30 µm | | | 8 | 11 | 8 | 12 |
| Resol Lösung | +5.5 | +5.5 | | +5.5 | +5,0 | |
| Novolak Lösung | | | +5.5 | | | |
| Steinkohlenteer | | | | | | +5,0 |
| Chemische Analyse | | | | | | |
| CaO | 0.90 | 0.84 | 20.56 | 0.90 | 0,85 | 55,10 |
| SiO₂ | 0.20 | 4.78 | 7.81 | 0.76 | 0,53 | 1,13 |
| Al₂O₃ | 0.20 | 2.21 | 0.39 | 0.37 | 5,62 | 0,66 |
| Fe₂O₃ | 0.50 | 0.47 | 0.30 | 0.51 | 0,48 | 0,51 |
| MgO | 98.20 | 91.70 | 70.94 | 9.7.46 | 92,52 | 42,59 |
| Restkohlenstoff | 11.38 | 11.38 | 12.98 | 27.83 | 14,85 | 18,90 |

**Tabelle 2:**

| Rohstoffe | A | B | C | D |
|---|---|---|---|---|
| Magnesiasinter 2-4 mm | 24 | 20 | | 10 |
| Magnesiasinter 0.3-2, mm | 41 | 28,5 | | 10 |
| Dolomasinter 1-5mm | | | 35 | |
| Dolomasinter <1mm | | | 10 | |
| Granalien Nr. 4 | 35 | | | |
| Granalien Nr. 5 | | | | 80 |
| Granalien Nr. 6 | | 50 | 50 | |
| Aluminium-Pulver | | 1,5 | | |
| Resol Lösung | +2.2 | | | +2,3 |
| Ruß ≤ 30 µm | | +2,0 | +2,0 | |
| Steinkohlenteerpech | | +2,0 | +2,5 | |
| chemische Analyse | | | | |
| CaO | 1.76 | 25,2 | 55,32 | 0,86 |
| SiO₂ | 0.57 | 0,61 | 0,84 | 0,46 |
| Al₂O₃ | 0.25 | 3,44 | 0,57 | 4,43 |
| Fe₂O | 0.29 | 0,49 | 0,50 | 0,48 |
| MgO | 97.13 | 70,25 | 42,76 | 93,77 |
| Restkohlenstoff | 10.29 | 13,06 | 13,13 | 12,46 |

## Patentansprüche

1. Keramisches Zement-Drehofen Auskleidungs-Erzeugnis, das zu ≥ 30 Masse-% aus verpressten Granalien aufgebaut ist, wobei die Granalien neben einem temporären Bindemittel die folgenden Komponenten enthalten:
1.1.1 mindestens eine MgO-hältige Komponente aus der Gruppe: Sintermagnesia, Schmelzmagnesia, Dolomasinter, Schmelzdoloma,
1.1.2 in einer Kornfraktion d₅₀ < 125 µm,
1.1.3 in einem Masseanteil von 70-93 %,
1.2.1 mindestens eine kohlenstoffhältige Komponente aus der Gruppe: Graphit, Ruß, Elektrodenbruch, calcinierter Anthrazit,
1.2.2 in einer Teilchengröße d₅₀ < 125 µm,
1.2.3 in einem Masseanteil von 7-30 %,
1.3 optional: eine oder mehrere sonstigen Feststoffkomponenten in einem Masseanteil < 10 % und
1.4 das Erzeugnis neben den Granalien mindestens eine weitere, bei der Anwendung feuerfeste Komponente aufweist.

2. Erzeugnis nach Anspruch 1 mit einem Masseanteil der MgO-hältigen Komponente an den Granalien ≥ 80 %.

3. Erzeugnis nach Anspruch 1 mit einem Masseanteil der C-hältigen Komponente an den Granalien ≥ 10 %.

4. Erzeugnis nach Anspruch 1 mit mindestens einer sonstigen Feststoffkomponente aus der Gruppe: Metalle, Metalloxide, Metallcarbide, Metallnitride.

5. Erzeugnis nach Anspruch 1 mit mindestens einer MgO-hältigen Komponente in einer Kornfraktion d₉₅ < 125 µm.

6. Erzeugnis nach Anspruch 1 mit mindestens einer kohlenstoffhältigen Komponente in einer Teilchengröße d₉₅ < 125 µm.

7. Erzeugnis nach Anspruch 1, dessen sonstige Feststoffkomponente(n) in einer Kornfraktion d₅₀ < 125 µm vorliegt/vorliegen.

8. Erzeugnis nach Anspruch 1 mit einer Granaliengröße d₅₀ < 1 mm.

9. Erzeugnis nach Anspruch 1 mit einer Granaliengröße d₉₅ < 1 mm.

10. Erzeugnis nach Anspruch 1, bei dem mindestens 50 M.-% der Feststoffkomponenten in einer Teilchengröße d₉₅ < 50 µm vorliegen.

11. Erzeugnis nach Anspruch 11, dessen weitere Komponente eine MgO-hältige Komponente wie Sinter- oder Schmelzmagnesia ist.

## Claims

1. A ceramic cement rotary kiln lining product comprising ≥ 30 mass% pressed granules, which granules comprise, besides a temporary binder, the following components:
1.1.1 at least one MgO-containing component from the group: sintered magnesia, fused magnesia, doloma sinter, fused doloma,
1.1.2 in a d₅₀ grain size fraction of < 125 µm,
1.1.3 in a proportion by mass of 70-93%,
1.2.1 at least one carbon-containing component from the group: graphite, carbon black, electrode fragments, calcined anthracite,
1.2.2 in a d₅₀ particle size of < 125 µm,
1.2.3 in a proportion by mass of 7-30%,
1.3 optionally: one or more other solid components in a proportion by mass of < 10%, and
1.4 the product comprises at least one further component, which is refractory in service, besides the said granules.

2. A product according to claim 1 with a proportion by mass of the MgO-containing component in the granules of ≥ 80%.

3. A product according to claim 1 with a proportion by mass of the C-containing component in the granules of ≥ 10%.

4. A product according to claim 1 with at least one other solid component from the group: metals, metal oxides, metal carbides, metal nitrides.

5. A product according to claim 1 with at least one MgO-containing component in a d₉₅ grain size fraction of < 125 µm.

6. A product according to claim 1 with at least one carbon-containing component in a d₉₅ particle size fraction of < 125 µm.

7. A product according to claim 1, the other solid component(s) of which is/are present in a d₅₀ grain size fraction of < 125 µm.

8. A product according to claim 1 with a d₅₀ granule size of < 1 mm.

9. A product according to claim 1 with a d₉₅ granule size of < 1 mm.

10. A product according to claim 1, in which at least 50 mass% of the solid components are present in a d₉₅ particle size of < 50 µm.

11. A product according to claim 1, the further component of which is an MgO-containing component such as sintered or fused magnesia.

## Revendications

1. Produit céramique de garnissage de four tournant à ciment, qui est constitué à ≥ 30 % en masse de grenailles compactées, hormis un liant temporaire, les grenailles contenant les composants suivants :
1.1.1 au moins un composant contenant de la MgO, du groupe :
magnésie frittée, magnésie électrofondue, dolomie frittée, dolomie fondue,
1.1.2 dans une fraction granulométrique d₅₀ < 125 µm,
1.1.3 dans un pourcentage en masse de 7 à 93 %,
1.2.1 au moins un composant carboné, du groupe :
graphite, noir de carbone, rupture d'électrode, anthracite calciné,
1.2.2 dans une grandeur de la particule élémentaire d₅₀ < 125 µm,
1.2.3 dans un pourcentage en masse de 7 à 30 %,
1.3 en option : un ou plusieurs autres composants solides, dans un pourcentage en masse < 10 % et
1.4 le produit comportant, hormis les grenailles au moins un autre composant, réfractaire lors de l'utilisation.

2. Produit selon la revendication 1, avec un pourcentage en masse du composant contenant de la MgO ≥ 80 % par rapport aux grenailles.

3. Produit selon la revendication 1, avec un pourcentage en masse du composant contenant du C ≥ 10 % par rapport aux grenailles.

4. Produit selon la revendication 1, avec au moins un autre composant solide du groupe : métaux, oxydes métalliques, carbures métalliques, nitrures métalliques.

5. Produit selon la revendication 1, avec au moins un composant contenant de la MgO dans une fraction granulométrique d₉₅ < 125 µm.

6. Produit selon la revendication 1, avec au moins un composant contenant du carbone, dans une grandeur de la particule élémentaire d₉₅ < 125 µm.

7. Produit selon la revendication 1 dont le(s) composant(s) solide(s) est (sont) présent(s) dans une fraction granulométrique d₅₀ < 125 µm.

8. Produit selon la revendication 1, avec une grandeur de grenailles d₅₀ < 1 mm.

9. Produit selon la revendication 1, avec une grandeur de grenailles d₉₅ < 1 mm.

10. Produit selon la revendication 1, dans lequel au moins 50 % en masse des composants solides se présentent dans une grandeur de la particule élémentaire d₉₅ < 50 µm.

11. Produit selon la revendication 1, dont l'autre composant est un composant contenant de la MgO, comme la magnésie frittée ou la magnésie électrofondue.
